Europäisches Patentamt

(19) European Patent Office

Office européen des brevets

(11) Publication number: **0 117 057**
**A2**

(12) **EUROPEAN PATENT APPLICATION**

(21) Application number: **84300280.9**

(22) Date of filing: **17.01.84**

(51) Int. Cl.³: **B 29 C 17/02**

(30) Priority: **18.01.83 US 458815**

(43) Date of publication of application:
**29.08.84 Bulletin 84/35**

(84) Designated Contracting States:
**AT BE CH DE FR IT LI NL SE**

(71) Applicant: **RAYCHEM CORPORATION**
**300 Constitution Drive**
**Menlo Park California 94025(US)**

(72) Inventor: **Kite, Joseph Sellers, III**
**R.D. No.1 Box 272 Glenmore**
**Pennsylvania 19343(US)**

(74) Representative: **Jones, David Colin et al,**
**RAYCHEM Intellectual Property Law Department Swan**
**House 37-39 High Holborn**
**London WC1(GB)**

(54) Abrasion resistant sleeve.

㊳ Disclosed herein is an abrasion resistant sleeve for flat substrates, for example ribbon cable and the like, which includes a hollow flexible sleeve made from a fabric of engineering plastic that has been flattened to define two edges, each of which has a top and a bottom layer. The layers of each edge are bonded together permanently while the sleeve is in the flattened condition to maintain the sleeve in said condition. Preferably the sleeve is axially compressible and radially expansible. Also disclosed herein is a method for making such a sleeve.

Fig. 4.

Croydon Printing Company Ltd.

EP 0 117 057 A2

## DESCRIPTION

## ABRASION RESISTANT SLEEVE

This invention relates to abrasion resistant sleeves and to a method for making same. More particularly, the invention relates to such sleeves which are made from a fabric of engineering plastic.

For some time now, manufacturers and users of cables and similar articles have desired to protect their cables from the effects of abrasion. Abrasion inhibits the efficiency of a cable's performance and may lead to a total breakdown of a system employing such a cable. Additionally, safety considerations warrant that electrical cables and the like do not become abraided. Should an outer dielectric layer of a cable become frayed from abrasion, electrical power may become inadvertantly transmitted to the user of the system causing electrical shock or serious injury.

Abrasion stems primarily from two sources. The first source is during installation and use when objects may rub against a cable resulting in abrasion. The second source is other cables. It is very often desirable to bundle cables together. However, during installation or use one or more cables may be rubbed against one or more other cables in the bundle which results in abrasion.

In order to satisfy industry needs with respect to both abrasion and bundling there has been developed a number of products.  One particular product is made by Bentley-Harris Manufacturing Company of Lionville, Pa. and sold under the federally registered trademark EXPANDO.  EXPANDO sleeving is a braided tubular article made from a strong plastic material, such as polyester. The EXPANDO sleeving functions in a manner similar to a "chinese finger" in that it is axially compressible and radially expansible and vice versa.  In use, the cables or similar articles are loaded into the sleeving by axially compressing the sleeve which causes the sleeve to expand radially.  In addition, the overall length of the sleeving decreases in direct proportion to its radial expansion.  As will be appreciated, this makes the loading operation considerably easier.

EXPANDO sleeving is very often used for bundling.  A number of cables are loaded into the sleeving with the sleeve in its axially compressed and radially expanded condition.  After loading, the sleeve is axially expanded and radially compressed firmly to hold the cables of the bundle in fixed relation to one another.

The EXPANDO sleeving prevents abrasion of the cable during installation by providing an outer surface other than the cable's own protective surface which can absorb the mechanical abuse of such installation. During use, the sleeving prevents one cable from rubbing against another cable by providing this protective outer layer between the cables.  In bundling applications, the sleeving fixes the position of one cable relative to the other cable and thereby prevents internal bundle abrasion in use and installation.

While solving the above described problems quite satisfactorily, EXPANDO sleeving has been found to be lacking in one particular respect. As described above, when the sleeving compresses it radially expands. The radial expansion occurs generally in all directions and on an infinite number of planes. The radial expansion creates what amounts to bulge in the sleeving. When round cross-sectioned cable or other similar articles are used, this bulge is not severe and is generally inconsequential. However, when flat cable or other similar substrates are used, this bulging results in an inordinate amount of lost space.

Computer manufacturers among others are greatly concerned with the efficient use of space. Very often the most limiting factor in computer hardware design is space. For this reason, among others, computer manufacturers use ribbon cable or other flat cable. The telecommunications industry as well as other advanced technical industries such as robotics are also primary users of ribbon cable and like flat substrates. Similarly these advanced technical industries are often constrained by space requirements.

As will be appreciated by anyone looking at the rear of a computer mainframe, organisation is critical. There are often tens of thousands of wires and literally hundreds of cable going from one place to the next. If the cables are disorganised and sloppy, a repairman's task may literally become impossible. Thus, it is important to organise the cable and wire and present an organised appearance.

It is an object of the present invention to provide an abrasion resistant sleeve for flat substrates and a method of making such a sleeve which can solve the space and organisational problems of users of ribbon cable and other flat substrates.

A first aspect of the present invention provides a method of making an abrasion resistant sleeve for flat substrates comprising the steps of forming a hollow elongate article from a fabric of engineering plastic; forming two edges in the article, each edge having a top and a bottom layer; bonding at least a portion of the top and bottom layer of each edge to make the article permanently flat; and cutting the article to the desired length to form the sleeve.

A second aspect of the present invention provides an abrasion resistant sleeve for a flat substrate, comprising a flexible hollow sleeve made from an engineering plastic fabric, the sleeve being flattened to form two edges, each edge having a top and a bottom layer, and a means for maintaining the sleeve in a flat condition permanently comprising a bond that has been formed between the layers of each edge when the sleeve is flattened.

The sleeve according to the present invention is advantageously made by the method according to the present invention.

The method and the sleeve according to the present invention advantageously provide an abrasion resistant sleeve which is compatible with flat substrates such as ribbon cable and the like. By compatible it is meant that the sleeve of the present invention can be used for abrasion protection in a space efficient manner.

**0117057**

The method and the sleeve according to the present invention also advantageously provide a sleeve that may be used as a bundling device, and also in a preferred embodiment a sleeve that expands and contracts in substantially a single plane.

The sleeve according to the present invention can be made from any fabric. In this context fabric means any woven, knitted, plaited, braided, felted or non-woven material made of fibres or yarns. The fabric can be knitted, made on a loom, needled, or constructed in some other fashion. It is particularly preferred that the article is braided.

The fibre of the article is preferably a monfilament, but multifiliament yarns and the like are also within the scope of this invention.

Preferably, the fibre or yarn used is polyester but any of the family of plastics known as engineering plastics are suitable. By engineering plastics, it is meant that the plastic has a tensile modulus of greater than 350 MPa (50,000 psi) and preferably greater than 700 Mpa (100,000 psi) and more preferably greater than 1050 MPa (150,000 psi) and most preferably at least 1400 MPa (200,000 psi). Examples of engineering plastics are the olefin polymers of which are preferred high density polyethylene, polypropylene, polybutene-1, poly 4-methyl pentene and fluorinated polyolefins for example, ethylene-trifluorochloroethylene copolymers, ethylenetetrafluoroethylene copolymers, and vinylidene fluoride polymers, especially polyvinylidene fluoride, and blends thereof, for example, the fluorinated olefin blends as described and claimed in British Patent 1,120,131, polyesters, for example, polyethylene terephthalate, polytetramethylene terephathalate for example that treated as described in British Patent Specification No. 1,486,207, polyphenylene-oxide and sulphide, blends of polyethylene oxide with styrene, silicone-carbonate block copolymers, polyketones, such as polyarylether ketones, for example, those described and claimed in British Patent Nos. 1,387,303 and 1,383,393, polysulphones, for example, polyaryl sulphones, polyarylether sulphones, polyethermides, for example those described in U.S. Patent No. 3,847,867, polycarbonates especially those derived from bis phenol-A, polyamides, especially those describedand claimed in British Patent No. 1,287,932, epoxy resins and blends of one or more of the above mentioned polymeric materials either with each other or with other polymeric materials. A more detailed discussion of the above materials in found in British Specification No. 1,529,351 which is incorporated herein by reference.

Preferably the sleeve is axially compressible and radially exapansible, such that in response to an axially compressible force the sleeve radially expands. Preferably the means for maintaining the sleeve in a flat condition cooperates with the sleeve causing the sleeve axially to compress and radially to expand in substantially the same plane. In a particulary preferred embodiment the sleeve is substantially similar to the EXPANDO sleeving described above with the added feature that the expansion and contraction of the sleeve occurs substantially on the same plane, thereby saving space.

In a preferred embodiment the sleeve is dimensionally recoverable. A "dimensionally recoverable article" is one whose dimensional configuration may be made to change when subjected to an appropriate treatment. In the present case, where an axially compressible radially expandable sleeve is used, the sleeve is preferably "set", by the bonding of its edges, in its axially expanded state such that the sleeve will return to that state after a compressive force has been applied and then removed.

Preferably the sleeve has been flattened from an initially tubular sleeve, preferably an initially tubular sleeve of substantially circular cross-section.

The means for maintaining the sleeve in a flat condition may comprise any type of bond. The same type of bond may be formed at each edge or a different type of bond. The bond may be a continuous bond between the layers of each edge or an intermittant bond.

Bonding, as used herein, is used in its broadest sense to mean holding, fastening, binding and the like and can include crimping, fusing, gluing, welding or any other method of creating a permanent crease in the edges of the article and the like.

Preferably the bond is formed by heat fusion or hot crimping. Particularly preferably the bond is formed by ultrasonic means. Bonding by hot crimping or ultrasonic means is particularly preferred for applications where it is desirable to have the edges non-fused.

Since the article is made from a fabric, at the flattened, bonded, edges of the article each fibre or yarn that constitutes the fabric is bent over and folded back on itself. Preferably at at least one of the edges, preferably at both edges, each fibre or yarn that constitutes the fabric is bonded only to itself such that there are substantially no bonds between different fibres or yarns, that is between any given fibre or

MP0846

yarn and its neighbouring fibre or yarn or any other fibre or yarn. This arrangement is advantageous since it means that the resultant bonded edge remains flexible. Such a flexible edge is particularly desirable where the sleeve is an axially compressible and radially expansible sleeve.

Preferably the width of at least one of the bonded edges, preferably both of the bonded edges, is less than 1.25 mm (50 thou), preferably less than 0.25 mm (10 thou), more preferably less than 0.15 mm (6 thou), especially preferably less than 0.15 mm (3 thou). Controlling the maximum width of the bonded edge is a convenient means of providing that, at the bonded edge, each fibre or yarn is bonded only to itself such that there are substantially no bonds between different fibres or yarns. The maximum edge bond width which will ensure that there is substantially no bonding between different fibres depends inter alia on the closeness of the interlacings of the fabric. For an EXPANDO type sleeving a maximum width less than 0.15 mm (6 thou) is especially preferred.

Considering now the method according to the present invention, in a preferred embodiment the edges of the article are formed by using a braided article and by drawing the braided article to a flattened condition. Preferably the braided article is drawn to its maximum extent.

In other aspects of this invention, the method provides for continuously bonding the layers of each edge together to form a continuous edge bond. While in another aspect of this invention, the method provides for intermittantly bonding the edges.

The bonding method used in the method according to the present invention may be any of the bonding types discussed above. For example the layers of each edge may be bonded together by fusing them together by applying heat to the edges. The layers of each edge may also be bonded together by ultrasonic means, or instead by heat crimping. The bonding is preferably effected such that at at least one, preferably both, of the bonded edges each fibre or yarn that constitutes the fabric is bonded only to itself such that there are substantially no bonds between different fibres or yarns. Preferably the bonding is effected such that the width of at least one, preferably both, of the bonded edges is less than 1.25 mm (50 thou), more preferably less than 0.25 mm (10 thou), more preferably less than 0.15 mm (6 thou), especially preferably less than 0.08 mm (3 thou).

Embodiments of the present invention will now be described, by way of example, with reference to the accompanying drawings, wherein:

Figure 1 is a schematic view illustrating formation of the hollow elongate article of the present invention;

Figure 2 is a schematic view illustrating the step of forming the edges of the article in accordance with the present invention;

Figure 3 is a cross-sectional view of the article of Figure 2 after the edges have been formed;

Figure 4 is a schematic view illustrating the article in accordance with the invention in use; and

Figure 5 is a schematic view illustrating a prior art device in use.

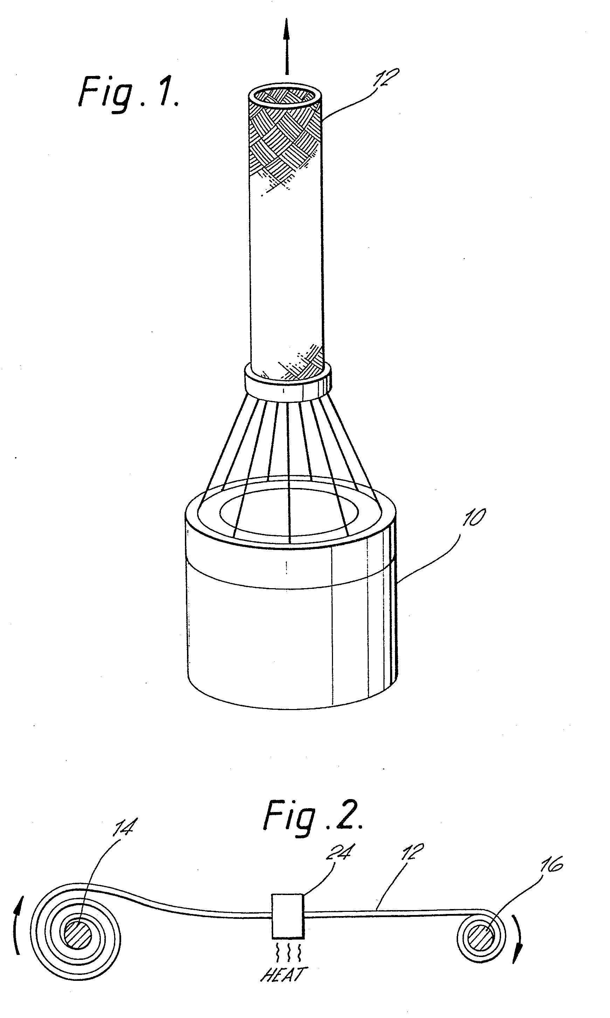

Referring to the drawing wherein reference characters designate like or corresponding parts throughout the several views, and referring particularly to Figure 1 there is shown a braiding apparatus 10 forming a hollow, braided elongate article 12. The fibre or yarn used in the braiding process is an engineering plastic and is preferably a monofilament.

Typically, when the article 12 is braided it has a tubular configuration and is generally round in cross-section. As set forth previously, it is desirable for the article to have a flat cross-section. In order to create a flat cross section, the article 12 is drawn in a process similar to pultrusion.

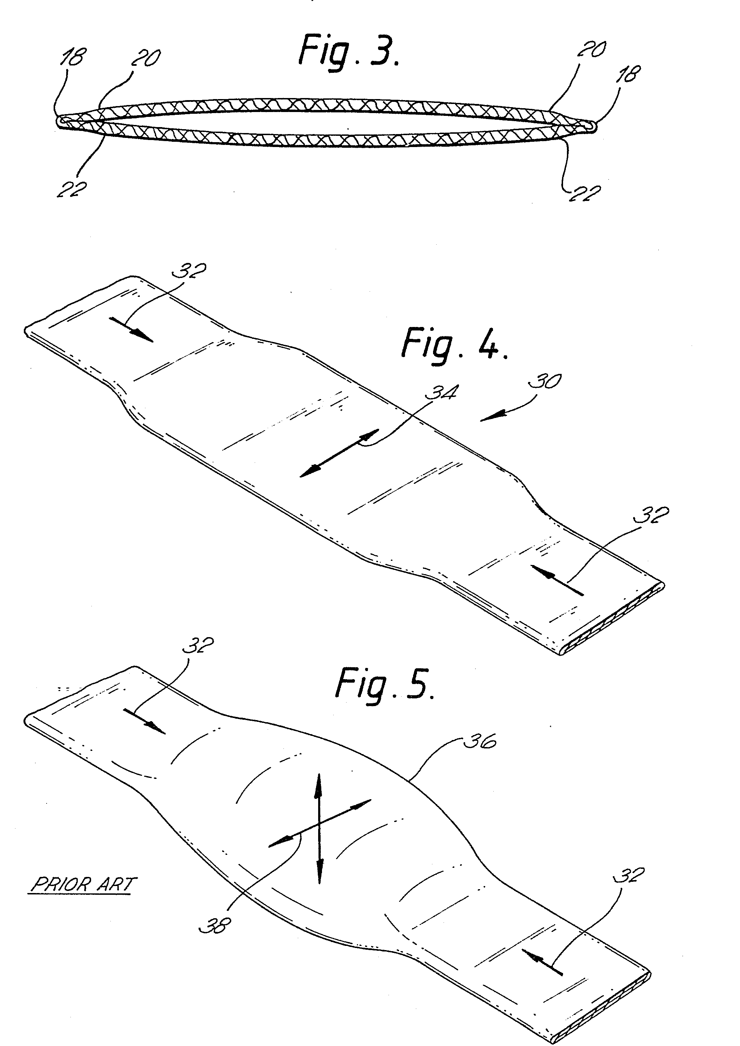

In order to effect the flattening process similar to poltrusion the article 12 is loaded on a drum 14. One end of the article is connected to a second drum 16. There is a predetermined amount of resistance against the drum 14. As the drum 16 pulls the article 12, the article flattens and forms two edges 18, shown in Figure 3. Each edge 18 includes a top layer 20 and a bottom layer 22. The article 12 is preferably drawn so as to expand it axially to the maximum extent possible before it is subjected to over-tension.

Between drums 14 and 16, there is a bonding device 24, through which the article travels as shown in Figure 2. The bonding device 24 permanently bonds the layers 20 and 22 of each edge 18 to each other. One method that can be used to effect such bonding is to use "V" shaped knives that are heated to a temperature sufficient to fuse the plastic. At least two such knives must be provided, one for each edge 18. Each "V" shaped knife is placed in close proximity to the article causing the

edge to melt and the layers 20 and 22 of each edge to fuse to each other when the knife is at a sufficient temperature.

For some applications it is desirable to have the edges non-fused. This may be accomplished by hot crimping which involves heating, but not melting, the plastic under pressure and simultaneously crimping the layers 20 and 22 of each edge 18 together. Additionally, an ultrasonic welding device may be empolyed to bond the layers 20 and 22 together in a similar manner to hot crimping.

In some applications, it may be desirable to form a continuous bond between the layers 20 and 22. In order to produce an article of this type, the bonding device would be continuously activated. For other applications, it may be desirable to produce an article which needs to be bonded at the edges only intermittantly. In this case the bonding device would be activated in the sequence desired.

After the process described in Figure 2 has been completed, the article is cut to form a sleeve of the desired length.

With particular reference to Figure 4, there is shown an abrasion resistant sleeve in accordance with this invention, generally indicated at 30. The sleeve is tubular and made from a fabric of engineering plastic as set forth above.

As discussed with reference to Figures 2 and 3, the tubular sleeve is flattened forming two edges, each having a top and a bottom layer. The sleeve further

0117057

includes means for maintaining the sleeve in a flattened condition permanently. The maintaining means comprises bonding the layers of each edge together permanently when the sleeve is in a flattened condition. This may be accomplished by melting the edges as the sleeve is drawn from drum 14 to drum 16; hot crimping the edges; or ultrasonic welding of the edges or other suitable means. The bonding is effected such that the width of each bond edge is less than 0.15 mm (6 thou) and such that at each edge each fibre of the braid is bonded only to itself such that substantially no bonds are formed between different fibres of yarns.

Preferably the sleeve is axially compressible and radially expansible. Thus, in response to an axially compressive force at either end of the sleeve 30 as indicated by the arrows 32, the sleeve radially expands as indicated at arrows 34. It will be appreciated that the expansion and contraction of the sleeve in accordance with the invention occurs substantially in the same plane.

Flat substrates, such as ribbon cable or the link, may be loaded into the sleeve. The user axially compresses the sleeve, loads in the ribbon cable, and releases the sleeve to allow axial expansion. It will be appreciated that when the sleeve is made in accordance with the preferred method above, it will be dimensionally recoverable. The sleeve 30 having been heat set (or otherwise having its edges bonded) in the axially expanded state (caused by drawing as described with reference to Figure 2), will return to that state after the compression force has been released. The dimensional recovery of the sleeve causes it to conform to the shape of the substrate that has been inserted within it. This of course aids in protecting the substrate from abrasion as well as adding to the appearance of a bundle. As described in more detail above the dimensional recovery of the sleeve 32 provides an efficient means for bundling a number of such substrates by the sleeve.

It has been found that the maintaining means is more necessary on sleeves having a diameter over 12.7 mm (1/2 inch). For sleeves having a diameter of 12.7 mm (1/2 inch) or less, a non-permanent crease may be imparted to the sleeve with substantially satisfactory results. However, currently sleeves of one inch or more require a permanent maintaining means as set forth herein to function satisfactorily.

With particular reference to Figure 4, there is seen a prior art device 36. Initially the device 36 may lay flat or have a round cross-section as seen in Figure 1. The device 36 is axially contractible and radially expansible in a manner similar to the present invention. However, unlike the present invention, when an axially compressive force represented by arrows 32 is applied to device 36, radial expansion occurs over an infinite number of planes as indicated by arrows 38.

As stated earlier, the radial expansion of device 36 results in bulging. This bulging gives the structure of device 36 with the substrate an unslightly presentation and takes up, wastefully, an inordinate amount of space. When using the present invention as embodied in sleeve 30 with flat substrates, this bulging does not occur and hence considerable amounts of space are saved.

CLAIMS:

1.   A method of making an abrasion resistant sleeve for flat substrates comprising the steps of:

forming a hollow elongate article from a fabric of engineering plastic.

forming two edges in the article, each edge having a top and a bottom layer;

bonding at least a portion of the top and bottom layer of each edge to make the article permanently flat; and

cutting the article to the desired length to form the sleeve.

2.   A method according to claim 1, wherein the article is formed by braiding.

3.   A method according to claim 2, wherein the edges are formed by drawing the braided article to a flattened condition.

4.   A method according to any preceding claim, wherein the layers of each edge are bonded togehter by fusing them together by applying heat to the edges, or by ultrasonic means, or by heat crimping.

5.  A method according to any preceding claim, wherein the layers of each edge are bonded continuously, or alternatively intermittantly.

6.  A method according to any preceding claim, wherein the bonding is effected at at least one edge of the article such that each fibre or yarn that constitutes the fabric is bonded only to itself such that substantially no bonds are formed between different fibres or yarns.

7.  A method according to any preceding claim, wherein the bonding is effected such that the width of at least one of the bonded edges of the article is less than 1.25 mm (50 thou), preferably less than 0.25 mm (10 thou), more preferably less than 0.15 mm (6 thou), especially preferably less than 0.08 mm (3 thou).

8.  An abrasion resistant sleeve for a flat substrate, comprising:

a flexible hollow sleeve made from an engineering plastic fabric, preferably a braid, the sleeve being flattened to form two edges, each edge having a top an a bottom layer, and

means for maintaining the sleeve in a flat condition permanently comprising a bond that has been formed between the layers of each edge when the sleeve is flattened.

9.  A sleeve according to claim 8, wherein the sleeve is axially compressible and radially expansible.

10. A sleeve according to claim 9, wherein the means for maintaining the sleeve in a flat condition cooperates with the sleeve causing the sleeve axially to compress and radially to expand in substantially the same plane.

11. A sleeve according to any one of claims 8 to 10, wherein the sleeve is dimensionally recoverable.

12. A sleeve according to any one of claims 8 to 10, wherein the means for maintaining the sleeves in a flat condition comprises a continuous bond or alternatively in intermittant bond between the layers of each edge.

13. A sleeve according to any one of claims 15 to 25, wherein at at least one of the bonded edges each fibre or yarn that constitutes the fabric is bonded only to itself such that there are substantially no bonds between different fibres or yarns.

14. A sleeve according to any one of claims 15 to 26, wherein the width of at least one of the bonded edges is less than 1.25 mm (50 thou), preferably less than 0.25 mm (10 thou), more preferably less than 0.15 mm (6 thou), especially preferably less than 0.08 mm (3 thou).

15. A sleeve made by a method according to any one of claims 1 to 7.

Fig.1.

Fig.2.

HEAT

Fig. 3.

18  20                                          20  18

22                                                  22

Fig. 4.

32

34              30

32

Fig. 5.

32

36

PRIOR ART

38                32